# FASCICULE DE BREVET EUROPEEN

(11) **EP 2 825 356 B1**
(45) Date de publication et mention de la délivrance du brevet: **04.05.2016**
(21) Numéro de dépôt: 12794428.8
(22) Date de dépôt: 31.10.2012
(51) Int. Cl.: B29B 7/48, C08J 3/20, C08K 3/00, C08L 5/04, C08L 23/12

(54) **MATIERE THERMOPLASTIQUE CHARGEE ADAPTEE POUR L'INJECTION OU L'EXTRUSION ET PROCEDE D'OBTENTION CORRESPONDANT**
GEFÜLLTES THERMOPLASTISCHES MATERIAL FÜR INJEKTION ODER EXTRUSION UND ENTSPRECHENDES HERSTELLUNGSVERFAHREN
FILLED THERMOPLASTIC MATERIAL SUITABLE FOR INJECTION OR EXTRUSION AND CORRESPONDING PRODUCTION PROCESS

(30) Priorité: 14.03.2012 FR 1252280
(43) Date de publication de la demande: 21.01.2015
(73) Titulaire: Algopack, 35400 Saint Malo (FR)
(72) Inventeur: LUCAS, Rémy, F-35400 Saint Malo (FR)
(74) Mandataire: Ermeneux, Bertrand
(86) Numéro de dépôt international: PCT/FR2012/052540
(87) Numéro de publication internationale: WO 2013/135978

(56) Documents cités:
- FR-A1- 2 934 600

## Description

### 1. Domaine de l'invention

Le domaine de l'invention est celui de la chimie et en particulier des matières thermoplastiques.

Plus précisément, l'invention concerne une matière thermoplastique chargée adaptée pour être moulée par injection ou extrudée et son procédé d'obtention.

L'invention peut également être utilisée pour la fabrication de produits thermoformés.

### 2. Etat de la technique

Il est classique d'ajouter des charges à une résine, ou matrice, constituée de polymères ou copolymères thermoplastiques dérivés du pétrole, et éventuellement un ou plusieurs plastifiants ou additifs, pour diminuer le coût de revient d'une matière thermoplastique destinée à l'injection plastique ou à être transformée par extrusion et/ou pour modifier certaines de ses propriétés.

Ces charges peuvent être des charges d'origine minérale, telles que le talc ou l'argile par exemple, des charges métalliques (particules d'aluminium, de cuivre ou de zinc ...), ou des charges d'origine végétale (sciure de bois, pâte de cellulose, ou amidon par exemple), seules ou en mélange.

Un inconvénient des charges minérales, des charges métalliques connues et de certaines charges végétales, telles que le bois compressé ou l'amidon, est cependant qu'elles présentent une densité supérieure à celle de la résine des polyoléfines thermoplastiques généralement utilisées en injection plastique ou pour l'extrusion, telle que exemple la résine de polypropylène ou de polyéthylène, ce qui augmente la masse de la pièce moulée.

Afin de réduire la masse des déchets provenant de pièces plastiques injectées ou de produits extrudées, et de limiter leur impact environnemental, on a cherché à utiliser des charges végétales légères.

On a ainsi pensé à substituer des fibres de verre par des fibres végétales, de lin ou de chanvre par exemple, qui sont environ deux fois moins denses.

Un inconvénient des fibres d'origine végétale est que leur coût de revient, lié aux opérations de défibrage de la matière première ou d'étuvage des fibres, s'avère élevé.

Un autre inconvénient des fibres végétales est qu'il est difficile d'éviter une reprise d'eau des fibres, après étuvage, lors du transport, du stockage et même de leur manipulation.

En outre, on constate que l'adhérence entre les fibres végétales et la matrice thermoplastique est souvent imparfaite, du fait de la nature des fibres, et surtout de la présence d'eau à la surface des fibres.

On a également proposé de mettre en oeuvre des matières végétales en poudre provenant de l'exploitation céréalière.

L'emploi de charges végétales issues de l'agriculture n'est cependant pas une solution satisfaisante, car il confisque des ressources agricoles qui pourraient être consacrées à nourrir des êtres humains ou des animaux d'élevage.

### 3. Objectifs de l'invention

L'invention a donc notamment pour objectif de pallier les inconvénients de l'état de la technique cités ci-dessus.

Plus précisément l'invention a pour objectif de fournir une matière thermoplastique qui comprenne moins de 70% en masse de polymères thermoplastiques synthétiques ou artificiels, et qui soit adaptée pour être moulée par injection ou pour être transformée par extrusion.

Un objectif de l'invention est également de fournir une matière plastique qui soit légère, et notamment qui présente une densité inférieure à 0,80.

Un autre objectif de l'invention est de fournir une matière plastique qui soit d'un coût de revient réduit.

Un objectif de l'invention est également de proposer une telle matière plastique qui soit apte au contact alimentaire.

L'invention a encore pour objectif de fournir une matière plastique qui présente une aptitude à se dégrader au moins partiellement et qui puisse être en partie bioassimilée par l'environnement.

Encore un objectif de l'invention est de fournir une technique d'obtention d'une telle matière plastique qui soit simple à mettre en oeuvre et peu coûteuse.

### 4. Exposé de l'invention

Ces objectifs, ainsi que d'autres qui apparaitront par la suite sont atteints à l'aide d'une matière thermoplastique chargée apte à être injectée, comprenant au moins 90% en masse, et de préférence au moins 97% en masse, d'un mélange d'une polyoléfine thermoplastique, telle que le polypropylène ou le polyéthylène haute densité, avec un matériau formant charge, lequel comprend un alginate alcalin dans une proportion massique de 5 à 15 % du poids total dudit matériau, un agent de charge, de préférence de la terre de diatomées, dans une proportion massique de 65 à 80 % du poids total, un agent de gélification tel que du sulfate de calcium et un agent de contrôle de la gélification, et est associé à ladite polyoléfine thermoplastique dans des proportions massiques respectives de 40 à 150g pour 100g au sein dudit mélange.

La demanderesse a en effet constaté de façon surprenante et inattendue qu'en chargeant une polyoléfine thermoplastique à 30 à 60% en masse avec un matériau inhabituel constitué principalement d'une substance gélifiante à base d'extraits d'algues brunes appelée alginate alcalin, et d'un agent de charge inerte n'interférant pas dans la gélification de l'alginate et ayant une faible affinité avec l'eau, on obtient une matière thermoplastique homogène après chauffage, aisée à mouler par injection ou à extruder et permettant de produire des pièces ajourées, et généralement plus légère que les matières thermoplastiques connues.

Il convient de noter que les gels d'alginate alcalin sont stables à la chaleur jusqu'à des températures au moins égales à 150°C. C'est notamment le cas du gel d'alginate de sodium qui présente une température de fusion supérieure à 300°C, et qui reste donc stable lorsqu'il est porté à la température de fusion d'un polypropylène injectable de grade commercial (160 à 166°C) ou d'un polyéthylène haute densité (128 à 135°C).

En outre, les gels d'alginate sont faiblement denses.

Des polyoléfines thermoplastiques de différentes natures peuvent être mises en oeuvre au sein d'une matière thermoplastique selon l'invention, et par exemple du polypropylène, du polyéthylène, du polyméthylpentène, ou du polybutène-1. Il peut notamment s'agir de polyéthylène haute densité, aussi connu sous l'acronyme PEHD.

Dans une variante, il peut être prévu de mettre en oeuvre ladite matière thermoplastique chargée apte à être injectée sans utiliser d'agent de contrôle de la gélification. En d'autres termes, cette matière plastique apte à être injectée peut être constituée d'au moins 90% en masse d'un mélange d'une polyoléfine thermoplastique avec un matériau formant charge, lequel comprend un alginate alcalin dans une proportion massique de 5 à 15 % du poids total dudit matériau, un agent de charge dans une proportion massique de 65 à 80 % du poids total et un agent de gélification et est associé à ladite polyoléfine thermoplastique dans des proportions massiques respectives de 40 à 150g pour 100g au sein dudit mélange.

De préférence, l'agent de charge est de la terre de diatomées qui est une roche d'origine organique poreuse. L'agent de charge peut également être du kaolin ou une argile organophile.

Avantageusement, ledit agent de charge présente une densité apparente inférieure ou égale à 0,6 et/ou est poreux.

Ainsi on réduit la masse de la matière thermoplastique.

Il convient de noter que le gel d'alginate encapsulant au moins une partie des particules d'agent de charge est susceptible d'empêcher la polyoléfine thermoplastique, et par exemple du polypropylène, de combler les pores de l'agent de charge, lors du chauffage de la matière thermoplastique

Préférentiellement, ledit agent de gélification représente 6 à 12% de la masse totale dudit matériau formant charge.

Selon un aspect particulier de l'invention, ledit agent de contrôle de la gélification représente 4 à 8% de la masse totale dudit matériau formant charge.

Du pyrophosphate de sodium peut notamment être mis en oeuvre à titre d'agent de contrôle de la gélification.

Dans au moins un mode de réalisation avantageux de l'invention, ledit matériau formant charge comprend un agent conservateur alimentaire, constituant de préférence de 0,1 à 2% du poids total dudit matériau formant charge.

Ainsi on empêche un développement de moisissures au sein du matériau formant charge, susceptibles d'altérer l'aspect ou la résistance de la matière thermoplastique.

De façon avantageuse, ledit matériau formant charge présente une densité inférieure ou égale à 0,6.

Ainsi, en mettant en oeuvre une polyoléfine légère, et par exemple un polypropylène léger, on obtient avantageusement une matière thermoplastique de densité comprise entre 0,7 et 0,78.

Selon un mode de réalisation particulier de l'invention, une matière thermoplastique telle que décrite ci-dessus comprend 1 à 3% en masse d'un mélange-maître de colorants et/ou d'additifs.

Dans un mode de réalisation particulier, une matière thermoplastique conforme à l'invention comprend 1 à 4% d'un agent couplant destiné à lui conférer des propriétés mécaniques et/ou une résistance à l'eau améliorées.

L'invention concerne également un procédé d'obtention d'une matière thermoplastique chargée apte à être injectée ou à être extrudée.

Selon l'invention, un tel procédé d'obtention comprend une étape de mélange homogène sous cisaillement, par exemple sous l'action d'une extrudeuse bi-vis co-rotative, d'un pré-mélange comprenant au moins 90% en masse, et de préférence au moins 97% en masse, d'un matériau formant charge associé à une polyoléfine thermoplastique, telle que du polypropylène ou du PEHD, dans des proportions massiques respectives de 40 à 150g pour 100g au sein dudit pré-mélange, ledit matériau formant charge comprenant un alginate alcalin dans une proportion massique de 5 à 15 % du poids total, un agent de charge, de préférence de la terre de diatomées, dans une proportion massique de 65 à 80 % du poids total, un agent de gélification tel que du sulfate de calcium et un agent de contrôle de la gélification.

Le procédé d'obtention selon l'invention s'avère donc particulièrement simple.

Préférentiellement un tel procédé d'obtention comprend une étape de séchage et/ou d'étuvage dudit pré-mélange coïncidant et/ou succédant à ladite étape de mélange homogène, exécutée de sorte à obtenir une matière thermoplastique chargée dont la teneur massique en eau est inférieure ou égale à 5%, et de préférence inférieure ou égale à 4% et encore plus préférentiellement inférieure ou égale à 1%.

On réduit ainsi le risque d'apparition de défauts au sein des pièces injectées, tels que des bulles isolées ou des amas de microbulles dues à un phénomène de givrage, ou de défauts en surface, tels que des taches blanchâtres, dus à la formation de bulles de vapeur d'eau au sein de la matière chauffée.

Selon un aspect particulier de l'invention, ladite polyoléfine thermoplastique et/ou ledit matériau formant charge se présentent sous forme de poudre, de billes ou de granules au sein dudit pré-mélange.

### 5. Liste des figures

D'autres caractéristiques et avantages de l'invention apparaitront plus clairement à la lecture de la description suivante d'un mode de réalisation de l'invention, et des dessins annexés parmi lesquels :
- la figure 1 illustre les étapes d'un procédé d'obtention d'une matière plastique selon l'invention sous forme d'un schéma-bloc ;
- la figure 2 est une vue de granules d'une matière thermoplastique chargée selon l'invention ;
- la figure 3 est une vue de deux séries de pièces moulées par injection à partir d'une matière thermoplastique selon l'invention.

### 6. Description détaillée d'un mode de réalisation de l'invention

L'exemple ci-après de formulation d'une matière thermoplastique selon l'invention et de son procédé d'obtention est donné à titre de simple illustration et sans caractère limitatif.

| Composé | % (massique) |
|---|---|
| polypropylène de grade 45 | 49 |
| alginate de sodium | 5,2 |
| terre de diatomées (agent de charge) | 36,7 |
| sulfate de calcium (agent de gélification) | 4,4 |
| pyrophosphate de sodium (agent de contrôle d'une gélification) | 1,4 |
| mélange-maître colorant | 2 |
| eau résiduelle | 1,3 |

Les quantités de chaque composé de cette matière thermoplastique sont données en pourcentage pondéral dans le tableau ci-dessus.

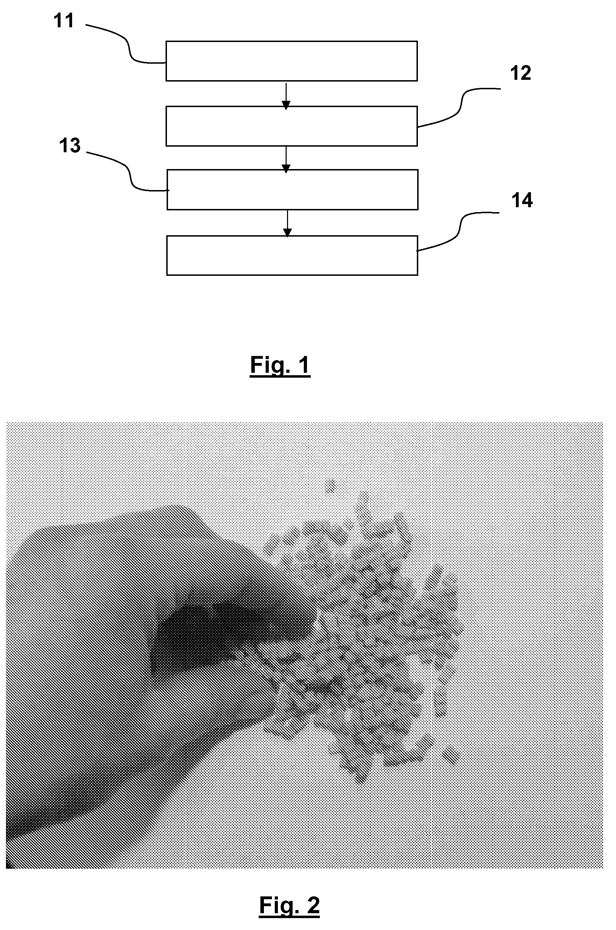

Cette matière thermoplastique se présente sous forme de granules, illustrées sur la figure 2, de diamètre moyen égal à 4mm et de longueur comprise entre 5 et 10mm.

La figure 1 est une représentation synoptique des étapes du procédé d'obtention de cette matière thermoplastique précédant une étape d'injection, sous forme de diagramme.

Dans une étape 11, on procède à un mélange homogène sous cisaillement, et à sec, dans une extrudeuse bi-vis co-rotative tournant à une vitesse moyenne de 180 tours par minutes d'un pré-mélange de granules de polypropylène de grade 45 avec un matériau formant charge en poudre, auquel on ajoute des microparticules d'un mélange-maître colorant.

Dans ce mode de réalisation de l'invention, le polypropylène, le matériau formant charge et le mélange-maître sont introduits dans la trémie d'alimentation de l'extrudeuse dans des proportions massiques respectives égales à 49%, 49% et 2% du poids total.

Dans une variante de ce mode de réalisation de l'invention, il peut également être prévu d'ajouter un lubrifiant tel que le stéarate de calcium pour faciliter la mise en oeuvre du mélange homogène et/ou un parfum.

On note que l'extrudeuse est avantageusement équipée de pompes à vide et d'un poste de dégazage atmosphérique pour favoriser l'évacuation de la vapeur d'eau résiduelle présente au sein du pré-mélange.

Le matériau formant charge a été obtenu en mélangeant une dose de poudres d'alginate de sodium, de terre de diatomées, de sulfate de calcium et de pyrophosphate de sodium en mélange, pour deux doses d'eau déminéralisée, de sorte à obtenir une pâte, puis en laissant reposer cette pâte pendant au moins 24h pour qu'elle durcisse. La pâte durcie a ensuite été compressée pour exsuder une partie de l'eau contenue dans la pâte durcie, étuvée de façon à abaisser sa teneur en eau en dessous de 2%, puis broyée sous forme d'une poudre dont la taille moyenne des grains est d'environ 0,1mm.

Dans une variante, il peut être envisagé d'inverser l'ordre des étapes d'étuvage et de broyage.

À la sortie de la filière de l'extrudeuse, le cordon de matière thermoplastique est débité sous forme de granules (étape 12).

Ces granules sont étuvées dans une étape 13, de sorte à obtenir des granules de matière thermoplastique chargée dont la teneur massique en eau est sensiblement égale à 2%.

Ces granules sont alors directement utilisables pour alimenter la trémie d'une presse à injection, dans laquelle les granules seront chauffées à une température inférieure à 150°C, et par exemple d'environ 147°C, avant d'être injectée sous pression dans une étape d'injection 14 connue en soi.

Il convient de noter qu'avantageusement, la température d'injection de la matière plastique selon l'invention s'avère nettement inférieure à celle d'un polypropylène, qui est généralement comprise entre 200 et 230°C, ce qui permet de réduire sensiblement la quantité d'énergie électrique nécessaire au chauffage de la matière à injecter.

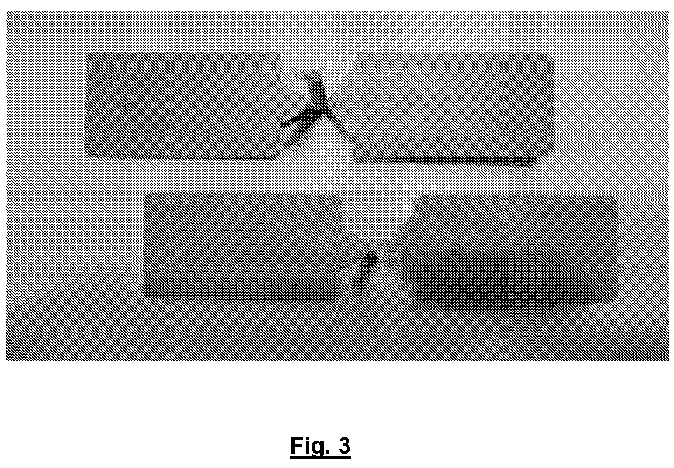

Deux séries de pièces moulées par injection 31 lors de l'étape 14 sont représentées sur la figure 3.

Comme on peut le voir sur cette figure 3, la reproductibilité des pièces est très satisfaisante.

Les granules représentées sur la figure 2 peuvent également être transformées par extrusion en les chauffant à une température comprise entre 145 et 150°C, après les avoir séchées pour réduire la teneur massique en eau de ces granules à 1%.

En option, les constituants de la matière thermoplastique selon l'invention peuvent être dosés directement à l'entrée de l'extrudeuse avant d'être portés à une température d'extrusion comprise entre 145 et 150°C, ce qui permet d'optimiser les coûts de production en éliminant la phase de mélange sous cisaillement.

Le mode de réalisation ici décrit n'a pas pour but de limiter la portée de l'invention. En conséquence, il pourra y être apporté de nombreuses modifications sans sortir du cadre de celle-ci telle que définie par les revendications.

## Revendications

1. Matière thermoplastique chargée apte à être injectée ou extrudée, comprenant au moins 90% en masse, et de préférence au moins 97% en masse, d'un mélange d'une polyoléfine thermoplastique avec un matériau formant charge, **caractérisée en ce que** ledit matériau formant charge comprend un alginate alcalin, dans une proportion massique de 5 à 15 % du poids total dudit matériau, un agent de charge, de préférence de la terre de diatomées, dans une proportion massique de 65 à 80 % du poids total, un agent de gélification tel que du sulfate de calcium et un agent de contrôle de la gélification, et **en ce que** ledit matériau formant charge et ladite polyoléfine thermoplastique sont associés dans des proportions massiques respectives de 40 à 150g pour 100g au sein dudit mélange.

2. Matière thermoplastique chargée selon la revendication 1, **caractérisée en ce que** ladite polyoléfine thermoplastique est un polypropylène.

3. Matière thermoplastique chargée selon la revendication 1, **caractérisée en ce que** ladite polyoléfine thermoplastique est un polyéthylène haute densité.

4. Matière thermoplastique chargée selon l'une quelconque des revendications 1 à 3, **caractérisée en ce que** ledit agent de charge présente une densité apparente inférieure ou égale à 0,6 et/ou est poreux.

5. Matière thermoplastique chargée selon l'une quelconque des revendications 1 à 4, **caractérisée en ce que** ledit agent de gélification représente 6 à 12% de la masse totale dudit matériau formant charge.

6. Matière thermoplastique chargée selon l'une quelconque des revendications 1 à 5, **caractérisée en ce que** ledit agent de contrôle de la gélification représente 4 à 8% de la masse totale dudit matériau formant charge.

7. Matière thermoplastique chargée selon l'une quelconque des revendications 1 à 6, **caractérisée en ce que** ledit matériau formant charge comprend un agent conservateur alimentaire, constituant de préférence de 0,1 à 2% du poids total dudit matériau formant charge.

8. Matière thermoplastique chargée selon l'une quelconque des revendications 1 à 7, **caractérisée en ce que** ledit matériau formant charge présente une densité inférieure ou égale à 0,6.

9. Matière thermoplastique chargée selon l'une quelconque des revendications 1 à 8, **caractérisée en ce qu'**elle comprend 1 à 3% en masse d'un mélange-maître de colorants et/ou d'additifs.

10. Matière thermoplastique chargée selon l'une quelconque des revendications 1 à 8, **caractérisée en ce qu'**elle est apte à être injectée ou extrudée à une température inférieure ou égale à 150°C, de préférence inférieure ou égale à 147°C.

11. Procédé d'obtention d'une matière thermoplastique chargée apte à être injectée ou extrudée, **caractérisée en ce qu'**elle comprend une étape de mélange homogène sous cisaillement, par exemple sous l'action d'une extrudeuse bi-vis co-rotative, d'un pré-mélange comprenant au moins 90% en masse, et de préférence au moins 97% en masse, d'un matériau formant charge associé à une polyoléfine thermoplastique, notamment du polypropylène ou du polyéthylène haute densité, dans des proportions massiques respectives de 40 à 150g pour 100g au sein dudit pré-mélange, ledit matériau formant charge comprenant un alginate alcalin, dans une proportion massique de 5 à 15 % du poids total dudit matériau, un agent de charge, de préférence de la terre de diatomées, dans une proportion massique de 65 à 80 % du poids total, un agent de gélification tel que du sulfate de calcium et un agent de contrôle de la gélification.

12. Procédé d'obtention d'une matière thermoplastique chargée selon la revendication 11, **caractérisé en ce qu'**il comprend une étape de séchage et/ou d'étuvage dudit pré-mélange coïncidant et/ou succédant à ladite étape de mélange homogène, exécutée de sorte à obtenir une matière thermoplastique chargée dont la teneur massique en eau est inférieure ou égale à 5%, et de préférence inférieure ou égale à 4% et encore plus préférentiellement inférieure ou égale à 1%.

13. Procédé d'obtention d'une matière thermoplastique chargée selon l'une quelconque des revendications 11 et 12, **caractérisé en ce que** ladite polyoléfine thermoplastique et/ou ledit matériau formant charge se présentent sous forme de poudre, de billes ou de granules au sein dudit pré-mélange.

## Patentansprüche

1. Gefülltes thermoplastisches Material, das geeignet ist, injiziert oder extrudiert zu werden, umfassend mindestens 90 Gew.-%, und bevorzugt mindestens 97 Gew.-% eines Gemischs eines thermoplastischen Polyolefins mit einem Füllstoff bildenden Material, **dadurch gekennzeichnet, dass** das Füllstoff bildende Material ein alkalisches Alginat, in einem Masseanteil von 5 bis 15 % des Gesamtgewichts des Materials, ein Füllmittel, bevorzugt aus Diatomeenerde, in einem Gewichtsanteil von 65 bis 80 % des Gesamtgewichts, ein Geliermittel, wie beispielsweise Calciumsulfat, und ein Mittel zur Kontrolle der Gelbildung umfasst, und dadurch, dass das Füllstoff bildende Material und das thermoplastische Polyolefin in Masseanteilen von jeweils 40 bis 150 g je 100 g innerhalb des Gemischs assoziiert sind.

2. Gefülltes thermoplastisches Material nach Anspruch 1, **dadurch gekennzeichnet, dass** das thermoplastische Polyolefin ein Polypropylen ist.

3. Gefülltes thermoplastisches Material nach Anspruch 1, **dadurch gekennzeichnet, dass** das thermoplastische Polyolefin ein Polyethylen hoher Dichte ist.

4. Gefülltes thermoplastisches Material nach einem der Ansprüche 1 bis 3, **dadurch gekennzeichnet, dass** das Füllmittel eine Rohdichte kleiner oder gleich 0,6 aufweist und/oder porös ist.

5. Gefülltes thermoplastisches Material nach einem der Ansprüche 1 bis 4, **dadurch gekennzeichnet, dass** das Geliermittel 6 bis 12 % des Gesamtgewichts des Füllstoff bildenden Materials ausmacht.

6. Gefülltes thermoplastisches Material nach einem der Ansprüche 1 bis 5, **dadurch gekennzeichnet, dass** das Mittel zur Kontrolle der Gelbildung 4 bis 8 % der Gesamtmasse des Füllstoff bildenden Materials ausmacht.

7. Gefülltes thermoplastisches Material nach einem der Ansprüche 1 bis 6, **dadurch gekennzeichnet, dass** das Füllstoff bildende Material ein Konservierungsmittel für Lebensmittel umfasst, das bevorzugt 0,1 bis 2 % des Gesamtgewichts des Füllstoff bildenden Materials bildet.

8. Gefülltes thermoplastisches Material nach einem der Ansprüche 1 bis 7, **dadurch gekennzeichnet, dass** das Füllstoff bildende Material eine Dichte kleiner oder gleich 0,6 aufweist.

9. Gefülltes thermoplastisches Material nach einem der Ansprüche 1 bis 8, **dadurch gekennzeichnet, dass** es 1 bis 3 Masse-% einer Masterbatch aus Farbstoffen und/oder Additiven umfasst.

10. Gefülltes thermoplastisches Material nach einem der Ansprüche 1 bis 8, **dadurch gekennzeichnet, dass** es geeignet ist, bei einer Temperatur kleiner oder gleich 150 °C, bevorzugt kleiner oder gleich 147 °C, injiziert oder extrudiert zu werden.

11. Verfahren zum Erhalt eines gefüllten thermoplastischen Materials, dass geeignet ist, injiziert oder extrudiert zu werden, **dadurch gekennzeichnet, dass** es einen Schritt zum homogenen Schermischen, zum Beispiel mit einem Doppelschneckenextruder, einer Vormischung umfasst, die mindestens 90 Masse-% und bevorzugt mindestens 97 Masse-% eines Füllstoff bildenden Materials, assoziiert mit einem thermoplastischen Polyolefin, insbesondere Polypropylen oder Polyethylen hoher Dichte, in Masseanteilen von jeweils 40 bis 150 g je 100 g innerhalb der Vormischung umfasst, wobei das Füllstoff bildende Material ein alkalisches Alginat in einem Masseanteil von 5 bis 15 % des Gesamtgewichts des Materials, ein Füllmittel, bevorzugt Diatomeenerde, in einem Masseanteil von 65 bis 80 % des Gesamtgewichts, ein Geliermittel, wie beispielsweise Calciumsulfat, und ein Mittel zur Kontrolle der Gelbildung umfasst.

12. Verfahren zum Erhalt eines gefüllten thermoplastischen Materials nach Anspruch 11, **dadurch gekennzeichnet, dass** es einen Schritt zum Trocknen und/oder Tempern der Vormischung gleichzeitig mit und/oder nach dem Schritt zum homogenen Mischen umfasst, der derart ausgeführt wird, dass ein gefülltes thermoplastisches Material erhalten wird, dessen Massegehalt an Wasser kleiner oder gleich 5 %, und bevorzugt kleiner oder gleich 4 % und noch stärker bevorzugt kleiner oder gleich 1 % ist.

13. Verfahren zum Erhalt eines gefüllten thermoplastischen Materials nach einem der Ansprüche 11 und 12, **dadurch gekennzeichnet, dass** das thermoplastische Polyolefin und/oder das Füllstoff bildende Material innerhalb der Vormischung in Form von Pulver, Kugeln oder Granulat vorliegt.

## Claims

1. A filled thermoplastic material capable of being injected or extruded, comprising at least 90% by weight, and preferably at least 97% by weight, of a mixture of a thermoplastic polyolefin with a material forming a filler, **characterized in that** said filler forming material comprises an alkaline alginate, in a weight percentage of 5 to 15% of the total weight of said material, a bulking agent, preferably diatomaceous earth, in a weight percentage of 65 to 80% of the total weight, a gelling agent such as calcium sulfate and a gelling control agent, and **in that** said filler forming material and said thermoplastic polyolefin are combined in respective weight percentages of 40 to 150 g per 100 g within said mixture.

2. The filled thermoplastic material according to claim 1, **characterized in that** said thermoplastic polyolefin is a polypropylene.

3. The filled thermoplastic material according to claim 1, **characterized in that** said thermoplastic polyolefin is a high-density polyethylene.

4. The filled thermoplastic material according to any one of claims 1 to 3, **characterized in that** said bulking agent presents a bulk density of less than or equal to 0.6 and/or is porous.

5. The filled thermoplastic material according to any one of claims 1 to 4, **characterized in that** said gelling agent represents 6 to 12% of the total mass of said filler forming material.

6. The filled thermoplastic material according to any one of claims 1 to 5, **characterized in that** said gelling control agent represents 4 to 8% of the total mass of said filler forming material.

7. The filled thermoplastic material according to any one of claims 1 to 6, **characterized in that** said filler forming material comprises a food preservative, preferably constituting 0.1 to 2% of the total weight of said filler forming material.

8. The filled thermoplastic material according to any one of claims 1 to 7, **characterized in that** said filler forming material presents a density of less than or equal to 0.6.

9. The filled thermoplastic material according to any one of claims 1 to 8, **characterized in that** the material comprises 1 to 3% by weight of a master batch of colorants and/or additives.

10. The filled thermoplastic material according to any one of claims 1 to 8, **characterized in that** the material is capable of being injected or extruded at a temperature of less than or equal to 150° C, preferably less than or equal to 147° C.

11. A method of obtaining a filled thermoplastic material capable of being injected or extruded, **characterized in that** the method comprises a step of mixing to form a homogeneous mixture under shear, for example under the action of a co-rotating twin-screw extruder, of a premix comprising at least 90% by weight, and preferably at least 97% by weight, of a filler forming material combined with a thermoplastic polyolefin, particularly polypropylene or high-density polyethylene, in respective weight percentages of 40 to 150 g per 100 g within said premix, said filler forming material comprising an alkaline alginate, in a weight percentage of 5 to 15% of the total weight of said material, a bulking agent, preferably diatomaceous earth, in a weight percentage of 65 to 80% of the total weight, a gelling agent such as calcium sulfate and a gelling control agent.

12. The method of obtaining a filled thermoplastic material according to claim 11, **characterized in that** the method comprises a step of drying and/or baking said premix coinciding with and/or following said homogeneous mixing step, executed so as to obtain a filled thermoplastic material in which the water content by weight is less than or equal to 5%, and preferably less than or equal to 4% and still more preferentially less than or equal to 1%.

13. The method of obtaining a filled thermoplastic material according to any one of claims 11 and 12, **characterized in that** said thermoplastic polyolefin and/or said filler forming material is presented in the form of powder, beads or granules within said premix.
